# EUROPEAN PATENT APPLICATION

(11) **EP 2 642 459 A1**
(43) Date of publication of application: **25.09.2013**
(21) Application number: 13001469.9
(22) Date of filing: 22.03.2013
(51) Int. Cl.: G07F 19/00

(54) **DIGITAL CROSSED IDENTIFICATION SYSTEM FOR SAFE DEVICES**

(30) Priority: 23.03.2012 BR 102012006543
(71) Applicant: Tecvan Informática LTDA., 45652-580 Ilheus (BR)
(72) Inventor: Pereira, Jorge Ribeiro, 09820-680 Sao Bernardo do Campo (BR)
(74) Representative: Izquierdo Faces, José

(57) **Abstract**

There are different solutions on the market for execution of financial transactions, from payments through credit cards and debit cards, to transactions with funds transfers electronic validation. These solutions are possible thanks to the use of dedicated equipment named herein of Safe Equipment. The construction of these facilities is subject to rigorous safe requirements since they deal with funds transactions, falling high degree of responsibility on the providers of such solutions, both for equipment and systems. As the installing processes of a foreign circuit, like "chupa cabra", necessarily require the violation of the Safe Equipment, is making small openings in the cabinet, or by exchanging parts and components of the equipment, this patent presents a system where the parts used are properly identified in a given Safe Equipment, so that we can conduct an investigation, at any time, of the parts that make up the Safe Equipment under analysis.

## Description

It refers to the present descriptive report to the Privilege of Invention in the field of safe devices to transactions and/or securities electronic transfers. Such devices characterize by being equipment subjected to fairly strict requirements, providing them high levels of security.

These devices running such electronic transfers of securities will be treated in this document by Safe Equipment Points of Sale (POS) are Examples of Safe Equipment, the PINPAD Terminals and the Encrypted Keyboards, these latter widely used in self-service banking systems.

The Safe Equipment are, therefore, those applied to the banking transactions process; from payments by using cards in credit or debit transactions, either by reading the magnetic stripe, whether through reading the Smart Card ID chip, both for electronic contact chips and Contactless chips; and any other securities transaction that require electronic validation.

Because they deal with financial transactions, the Safe Equipment is subject to attack by malicious individuals, acting unlawfully trying to insert circuits able to get the data from cards and record the users' passwords, such circuits are popularly known as "chupa cabra" ("goat sucker") and end up creating a database that will be then transmitted to some external equipment, such as a personal computer. This occurs through processes of communication that can be via Bluetooth, Wifi, GSM or similar.

These databases are used by fraudsters who use the information to create replicas of the cards. With these replicas they can perform monetary transactions, payments, etc., in an unauthorized manner, prejudicing the original card owner. This activity is popularly known as cards "cloning".

The action of fraudsters therefore depends on the inclusion of an intruder circuit in the Safe Equipment. For this is done, the Safe Equipment suffers, mandatorily, an violation action, either by simply opening of the same, or breakage of some part of this cabinet, or even the exchange in any part of the cabinet by a false part, or still a part that is original, belonging to other equipment.

The main objective of this invention is to stipulate a way to establish a method for assessing whether the parts of a particular Safe Equipment really belong to such equipment, thus ensuing their factory original setup settings.

Recognition of the parts and components of a Safe Equipment will be done by physical markings that can be barcode tags, engravings on low relief or high relief, laser engraving or information simply painted on the cabinets, whose data can be recorded in an internal database to the Safe Equipment The information of this database are shown on the display of the Safe equipment whenever it is started, or when a specific command is given for this via the keyboard, for example.

These data can also be stored in a database, creating a cross reference of all items used in a particular Safe Equipment, in a specific and unequivocal manner for all equipment in field.

Among the data to be recorded, the following can be considered:
- Serial Number of the Equipment;
- ID of the parts (parts markings of the cabinet);
- Closure seal code of the Safe Equipment

Other information that is deemed relevant can also be entered in specific fields, such as images of the equipment or observations to be fulfilled by the system operator.

It is another object of this invention the use of the crossed digital reference data masses of the Safe Equipment inside the Software of the Screening System of the Safe Equipment, so that the technical assistance teams can immediately identify, in places where the Safe Equipment are, possible violations of the devices, quickly and effectively.

We also have as objective of the invention the registration of the parts and pieces in a certain Safe Equipment within its own processing system. So that information on the parts used in the assembly of that apparatus can be directly extracted, allowing the Conference of the equipment components with your original registration, even without access to the database of the manufacturer. The information must be accessible through the sight glass or display on the Safe Equipment. Thus, the user himself/herself of the Safe Equipment might evaluate if your apparatus has suffered some kind of tampering, since all the parts will all be physically identified and the data of each one of these parts can be confronted with the content displayed on the screen of the Safe Equipment, when asked to display the codes of the parts through specific command.

It is also the objective of this invention that the data relating to the parts of a particular Safe Equipment can be used to block the same, if it is identified a situation of violation of the same. The blocking of the Equipment must be triggered by a command from the Screening System, where it is noted some inconsistency between the data reported in the parts and what is read from the internal database of the Safe Equipment. Such command is received by connecting the Safe Equipment with the Screening System, whether this communication is performed via the serial port or USB connection or even via wireless communication, such as Bluetooth, Wifi, GSM, among others.

The process of identification of the parties and components of a particular Safe Equipment is via markings on these parts and components that could be performed through the use of indelible labels attached to the parts, markings made with laser engraving, painting of identifications on parts or any other forms of similar engraving.

The written codes in the pieces and parts of a particular Safe Equipment must be contrasted with the Serial number of the Safe Equipment in a database of the manufacturer himself/herself of the apparatus.

Still seeking to achieve a level of deepened observation by users of the Safe Equipment, it is still suggested to use of translucent parts for the cabinet so that the inside of the Safe Equipment may be observed at any instant, so that foreign circuits can be easily identified by the users. The translucent parts may only include part of the cabinet or the complete cabinet, depending on how the Safe Equipment is conceived and designed.

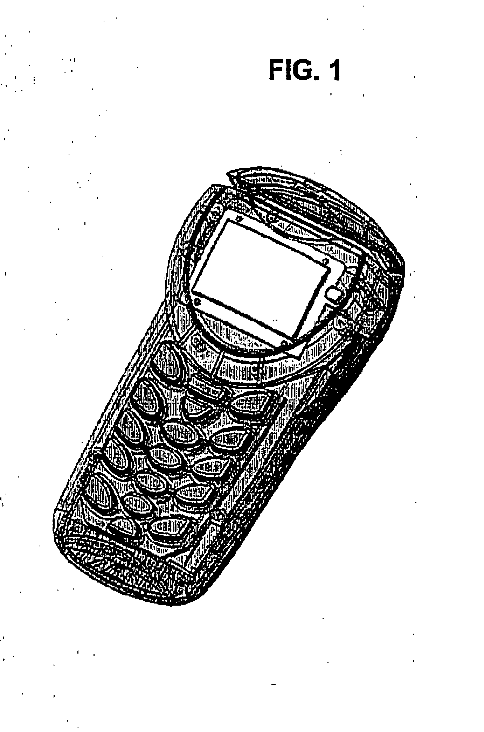

FIG. 1 - Shows an example of Safe Equipment with translucent cabinet that allows observing the internal circuitry to the apparatus.

Thus translucent parts allow the observation of the inner part of the Safe Equipment, thus enabling the presence of any undesired device inside the apparatus is easily identified.

## Claims

1. Crossed digital identification system for safe devices, characterize by establishing a way to identify the constituent parts and components of a certain Safe Equipment by engraving specific codes on each part.

2. Crossed digital identification system for safe devices, according to the claim 1, **characterized by** the fact of said system must be implemented by the Safe Equipment manufacturer, which will provide the necessary markings on the apparatus, whether using solutions of tags with barcodes, markings with laser print or any other possibilities of similar markings.

3. Crossed digital identification system for safe devices, according to the claim 2, **characterized by** the fact that said system will comprise one or more information as Serial Number of the Safe Equipment, ID (identification) of the parts of the cabinet, and seal used to close the product, among others, in addition, such data must be stored in the own Safe Equipment and must be accessible to the users on the display when the system is booted and also when prompted by a specific command for this.

4. Crossed digital identification system for safe devices, according to the claim 3, **characterized by** the fact that said system may have information relating to a particular Safe Equipment registered in a central database, which will be accessed by specific Software of the equipment screening system, enabling the validation of certain equipment through the crossing of information between the parts and the Serial Number of a particular Safe Equipment.

5. Crossed digital identification system for safe devices, according to the claim 4, **characterized by** the fact that said system may have information on a particular equipment recorded within the equipment, thus allowing the checking of the parts even if the Safe Equipment is not connected to the screening system established by the manufacturer, thereby recording will allow the validation or blocking of the use of the Safe Equipment, even though this is not connected to the screening system; such solution also allows the verification of the originality of the parts of a particular Safe Equipment confronting the information contained in each parts with the content presented on the screen of the Safe Equipment, when carrying the data request of these parts and components.

6. Crossed digital identification system for safe devices, according to the claim 5, **characterized by** the fact that said system provides the marking of a specific numbering on the parts and components of a particular Safe Equipment, as the marking of Chassis in automobiles, and that these fgures will be recorded in a database, so that information can be crossed, thus validating the originality of any Safe Equipment, specifically.

7. Crossed digital identification system for safe devices, according to the claim 6, **characterized by** the fact that said system might still rely on physical seals also numbered, which will be part of the database of the Safe Equipment in question; the seals of a Safe Equipment can be seals to close the apparatus, the seals with Void type tags to seals with steel chordae for the closure equipment, as can also be lock type latches (with or without steel cable) that keep Safe. Equipment fixed in its workstation.

8. Crossed digital identification system for safe devices, according to the claim 7, **characterized by** the fact that the data to be recorded should include necessarily the following information, and not restricted to them: - Serial Number of the Equipment; - parts ID (parts markings of the cabinet); - closure Seal Code of the Safe Equipment, and other information that may be considered relevant can also be entered in the register of the Safe Equipment, from reports in text format files to pictures and photographs of the Safe Equipment.

9. Crossed digital identification system for safe devices, according to the claim 8, **characterized by** the fact that said system can still be implemented in Safe Equipment fitted with translucent parts, totally or partially, allowing the recognition of unusual circuit inserted into the Safe Equipment in an unauthorized manner.
